# FASCICULE DE BREVET EUROPEEN

(11) **EP 2 672 922 B1**
(45) Date de publication et mention de la délivrance du brevet: **19.02.2020**
(21) Numéro de dépôt: 11808221.3
(22) Date de dépôt: 27.12.2011
(51) Int. Cl.: A61C 7/28

(54) **ENSEMBLE FORME PAR UNE ATTACHE AUTO-LIGATURANTE, UN CLIP ELASTIQUE ET UNE BASE COMPORTANT UNE BUTÉE POUR APPAREIL ORTHODONTIQUE**
ANORDNUNG AUS EINER SELBSTLIGIERENDEN ZAHNSPANGE, EINER ELASTISCHEN KLAMME UNE EINE BASIS MIT EINEM ANSCHLAGSTEIL FÜR EINE ORTHODONTISCHE VORRICHTUNG
ASSEMBLY FORMED BY A SELF-LIGATING BRACKET, AN ELASTIC CLIP, AND A BASE HAVING AN ABUTMENT PORTION FOR AN ORTHODONTIC APPARATUS

(30) Priorité: 28.12.2010 FR 1061312
(43) Date de publication de la demande: 18.12.2013
(73) Titulaire: American Orthodontics Corporation, Sheboygan, WI 53081-1048 (US)
(72) Inventeur: CURIEL, Patrick, 92200 Neuilly sur Seine (FR); SALAH, Philippe, 75020 Paris (FR); AYACHE, William, 92200 Neuilly Sur Seine (FR)
(74) Mandataire: Von Rohr Patentanwälte Partnerschaft mbB
(86) Numéro de dépôt international: PCT/EP2011/074098
(87) Numéro de publication internationale: WO 2012/089735

(56) Documents cités:
- US-A- 5 711 666
- US-A- 5 906 486
- US-A1- 2004 175 667
- US-A1- 2007 166 658

## Description

L'invention concerne un ensemble base/attache/clip à utiliser dans un appareillage orthodontique individualisé pour le traitement d'un patient, destiné principalement, mais non exclusivement, à être utilisé dans le cas d'une technique linguale, c'est-à-dire avec l'appareil disposé sur la face postérieure non visible des dents.

Classiquement, de tels appareils comportent :
- au moins un arc orthodontique, autrement dit un fil métallique exerçant sur les dents un effort tendant à les amener, à partir de leur position initiale insatisfaisante, dite « mal position », à une position finale satisfaisante, dite « position corrigée » ;
- et une série d'attaches, dites aussi couramment « brackets », pourvues chacune d'au moins une gorge pour la réception d'un arc orthodontique.

Les attaches sont fixées individuellement sur les dents du patient, dans une position déterminée permettant à l'arc orthodontique de transférer sur les dents les efforts nécessaires pour qu'elles passent de la mal position à la position corrigée pendant le traitement. Cette fixation est réalisée par l'intermédiaire d'une « base », c'est à dire d'un élément intermédiaire dont une face épouse la surface de la dent sur laquelle l'attache doit être fixée, et dont l'autre face supporte l'attache.

Le plus couramment, un ou plusieurs arcs orthodontiques, et avec lui ou eux une seule série d'attaches comportant chacune une ou plusieurs gorges, sont utilisés.

Les techniques orthodontiques linguales, qui ont l'avantage esthétique de laisser l'appareillage pratiquement invisible depuis l'extérieur, ont commencé à se développer vers 1980. Dans leur cas, un élément important de la réussite du traitement est le bon positionnement de l'attache et de sa gorge sur la dent, puisque ce positionnement détermine l'orientation des efforts qui sont imposés à la dent correspondante, et donc les orientations de la dent dans les différentes directions de l'espace lorsqu'elle se trouvera en position finale corrigée. Ce positionnement est beaucoup plus délicat à réaliser en technique linguale qu'en technique dite labiale ou vestibulaire (où l'appareillage est disposé sur la face antérieure des dents), du fait de l'angulation importante des faces postérieures des dents. Cette angulation fait qu'une légère erreur de positionnement de l'attache peut placer la gorge dans une mauvaise position, incapable d'assurer la correction souhaitée de la position de la dent.

Les techniques informatiques ont pu apporter des perfectionnements importants dans la facilité de conception d'appareillages orthodontiques individualisés, spécifiques à chaque patient.

En particulier dans le document WO-A-03/068099, on enseigne de concevoir de manière individualisée un ensemble formé d'une part par l'image virtuelle d'une base de fixation à la dent, conçue numériquement à partir d'une image informatique de l'arcade du patient avec les dents en mal position, et d'autre part une image virtuelle d'une attache pourvue d'une gorge pour l'insertion de l'arc orthodontique, cette image étant puisée dans une bibliothèque virtuelle d'attaches de formes prédéterminées. On réalise ensuite par prototypage rapide une attache formée d'un corps unique résultant de la combinaison de ces deux images. Puis on conçoit un arc orthodontique, conformé à l'aide d'un dispositif spécial, destiné à relier les attaches et à amener les dents du patient dans la position corrigée.

Après l'insertion de l'arc orthodontique dans la gorge de l'attache, cette gorge est obturée par le praticien de manière à y maintenir l'arc. Le plus classiquement, cette obturation est réalisée par insertion dans la gorge d'une ligature métallique ou élastomérique. Cependant, cette méthode a pour inconvénient de ne pas avoir une fiabilité optimale, du fait que la ligature peut ne pas être installée correctement par le praticien et peut voir ses propriétés s'altérer au fil du temps, notamment pour une ligature élastomérique. Si la ligature est déplacée ou détruite, le patient doit se déplacer au cabinet de l'orthodontiste pour la faire remplacer. Également, la réalisation soignée de chaque ligature prend beaucoup de temps, ce qui rend la mise en place de l'arc longue et inconfortable pour le patient. Enfin, si au cours du traitement il est nécessaire de changer l'arc, il faut que l'orthodontiste détruise de façon irréversible les ligatures pour enlever l'arc, ce qui là encore est long et inconfortable pour le patient. Et cette étape de destruction de la ligature conduit l'orthodontiste à exercer des efforts qui se transmettent à l'attache et peuvent fragiliser sa liaison avec la base.

Un progrès considérable a constitué en l'utilisation d'attaches dites « auto-ligaturantes ». Ces attaches sont adaptées pour recevoir un clip élastique (métallique) qui, après l'insertion de l'arc, est mis en place à une position qui obture la gorge et permet au clip d'empêcher la sortie de l'arc. Cette mise en place s'opère généralement par un glissement du clip selon la direction longitudinale de l'attache entre une position d'attente laissant la gorge ouverte pour l'insertion de l'arc et une position fonctionnelle fermée obturant la gorge, glissement qui peut éventuellement être complété par un mouvement de rotation comme dans le document US-A-6 776 613. Le déplacement du clip est réalisé manuellement par l'orthodontiste au moyen d'un de ses outils habituels et ne dure qu'une fraction de seconde. De même, le dégagement du clip préalable à un changement d'arc est réalisé par une simple traction exercée en sens inverse du glissement précédent, et est aussi très rapide. Enfin, les caractéristiques mécaniques et dimensionnelles du clip métallique sont stables dans le temps, et si l'attache et le clip ont été réalisés avec une bonne précision dimensionnelle, la fonctionnalité et la fiabilité de la ligature sont satisfaisantes.

Les attaches autoligaturantes connues ont cependant aussi leurs inconvénients. Elles sont souvent plus encombrantes que les attaches ordinaires du fait que le mouvement longitudinal de glissement du clip doit pouvoir être assuré sur une certaine course. Surtout, ce mouvement de glissement peut être gêné si du tartre s'est accumulé sur l'attache car il n'a pas été éliminé par un bon brossage de l'appareil en bouche par le patient. Lors d'un changement d'arc, l'ouverture et le replacement du clip sont alors rendus plus difficiles et on perd au moins partiellement l'un des avantages des attaches auto-ligaturantes.

Le document US 2004/175667 A1 décrit une attache autoligaturante dont un clip élastique est intégré à l'attache, à l'aide d'une partie formant charnière élastique.

Le document US 2007/166658 A1 décrit une attache autoligaturante dont un clip élastique est intégré à l'attache. La manipulation du clip nécessite néanmoins un mouvement de translation du clip à l'intérieur d'une gorge. C'est un inconvénient en cas d'entartrage de la gorge, lorsqu'un désengagement du clip est nécessaire. La forme générale du clip n'est pas celle d'un U puisque, d'une part les deux branches sont de longueurs différentes, et surtout l'une d'entre elles présente à son extrémité une griffe qui joue un rôle essentiel dans le mouvement et le maintien du clip dans l'encoche.

Le document US 5 906 486 A décrit un ensemble clip-attache qui se déplace en translation.

Le document US 5 711 666 A décrit un ensemble attache-clip, le clip étant un ressort de forme générale plate à l'état libre présentant quatre portions. Le clip participe de préférence à la mise en place de l'arc en ce que celui-ci est déposé dessus, et le clip est ensuite fléchi pour d'une part amener l'arc dans son logement, et d'autre part venir s'insérer par son extrémité dans un logement de l'attache qui va le bloquer.

Le but de l'invention est de proposer aux orthodontistes un dispositif de liaison entre une dent et un arc orthodontique comportant une attache auto-ligaturante et son clip associé, permettant de limiter ou supprimer les inconvénients ci-dessus.

A cet effet, l'invention a pour objet un ensemble formé par :
- une attache auto-ligaturante destinée à faire partie d'un appareil orthodontique, ladite attache présentant selon sa direction longitudinale une face externe et une face occlusale et étant pourvue sur sa face externe d'une gorge pour la réception d'un arc orthodontique ;
- et par un clip élastique déplaçable de manière réversible entre une position ouverte laissant un passage libre pour l'insertion de l'arc dans la gorge ou l'extraction de l'arc hors de la gorge et une position fermée obturant la gorge ;

Ladite attache et ledit clip comportent des moyens permettant au déplacement du clip de s'effectuer essentiellement selon un mouvement de rotation entre lesdites positions sans glissement en translation du clip.

Le clip a la forme générale d'un U dont une extrémité d'une première branche qui obture la gorge de l'attache est reçue dans un premier logement ménagé sur la face externe de l'attache, et dont une extrémité d'une deuxième branche est reçue dans un deuxième logement, ménagé sur la face occlusale de l'attache.

Le clip comporte au moins quatre parties successives, une première partie (ladite première branche), constituant une première partie terminale du clip, formant une languette de largeur I1, destinée à plonger dans ledit premier logement de l'attache, une deuxième partie de largeur I2, à laquelle la première partie est rattachée, destinée à obturer la gorge de l'attache lorsque le clip est en place, une troisième partie de largeur l3 constituant une jonction élastique entre d'une part la deuxième partie et d'autre part une quatrième partie (ladite deuxième branche) de largeur l4, constituant une deuxième partie terminale du clip et formant une patte destinée à venir s'insérer dans le deuxième logement de l'attache pour diriger la rotation du clip lors de ses mouvements commandés par l'orthodontiste.

L'ensemble comprend une base présentant une face externe et une face occlusale, ladite face externe de la base supportant ladite attache et ladite face occlusale étant destinée à reposer sur une dent du patient en épousant la surface de ladite dent, ladite base portant sur sa face externe une paroi délimitant, conjointement avec la face occlusale de l'attache, le deuxième logement dans lequel est reçue l'extrémité de la deuxième branche du clip.

Ladite base présente sur sa face externe un support sur lequel est placée ladite attache.

Ledit support comporte une partie plane et une butée. Ledit support comporte, sur la face de la butée destinée à être tournée à l'opposé de l'attache, un logement dans lequel la quatrième partie du clip est destinée à venir s'insérer lorsque le clip est en position d'obturation de la gorge.

La largeur l1 de la première partie du clip peut être inférieure à la largeur l2 de la deuxième partie du clip.

La largeur l3 de la troisième partie du clip peut être inférieure à la largeur l2 de la deuxième partie du clip.

La largeur l4 de la quatrième partie du clip peut être supérieure à la largeur l3 de la troisième partie du clip.

Le clip peut comporter un moyen de préhension permettant au praticien de le déplacer entre lesdites positions.

Ledit moyen de préhension peut être un orifice ménagé sur ladite deuxième partie du clip.

L'invention a également pour objet un appareil orthodontique comportant un arc orthodontique et des ensembles comportant chacun une attache, un clip et une base, destinés à être montés chacun sur une dent d'un patient, caractérisé en ce que au moins un desdits ensembles est du type précédent.

Comme on l'aura compris, l'invention repose sur une nouvelle conception de l'ensemble formé par une attache auto-ligaturante et le clip qui obture sa gorge. Cet ensemble a une conception qui permet au clip d'effectuer, lors de la fermeture et de l'ouverture de la gorge de l'attache, un mouvement qui est pratiquement un mouvement de pure rotation. On supprime donc le mouvement de glissement du clip qui était habituel et pouvait être gêné ou empêché par un dépôt de tartre sur le trajet du clip, ce qui compliquait le retrait de l'arc orthodontique. Il est aussi possible de conférer à l'attache une configuration plus compacte, par exemple dans sa direction longitudinale, puisqu'il n'y a plus de glissement du clip lors de son passage d'une position à l'autre. Même si la course du glissement est classiquement d'une longueur apparemment réduite (de l'ordre de quelques dixièmes de mm), à l'usage il s'avère que ce raccourcissement de l'attache apporte néanmoins au patient un supplément de confort très appréciable, notamment si l'appareil est du type lingual comme dans l'application privilégiée (mais non exclusive) de l'invention.

Un autre avantage très important est le fait qu'en cas de dépôt de tartre sur l'attache, l'ouverture du clip demeure facile car l'orthodontiste dispose lors de la rotation d'un bras de levier suffisamment important pour détacher la couche de tartre.

De préférence, comme dans l'exemple privilégié décrit, la base qui solidarise l'attache à la dent participe à la fixation du clip sur l'attache et à l'imposition de son mouvement de rotation.

L'invention sera mieux comprise à la lecture de la description qui suit, donnée en référence aux figures annexées suivantes :
- les figures 1 et 2 qui montrent en perspective avant et arrière un exemple d'attache selon l'invention, destinée à un appareil orthodontique de type lingual ;
- la figure 3 qui montre en perspective le clip associé à cette attache ;
- la figure 4 qui montre le clip placé sur l'attache ;
- les figures 5 et 6 qui montrent en perspective avant et arrière la base sur laquelle l'attache doit être placée ;
- la figure 7 qui montre en perspective avant l'ensemble formé par l'attache, le clip et la base des figures précédentes avec le clip en position ouverte ;
- la figure 8 qui montre en perspective arrière l'ensemble formé par l'attache, le clip et la base des figures précédentes avec le clip en position fermée ;

Cette description sera donnée en prenant pour exemple le cas où l'appareil auquel est destiné l'ensemble attache-clip-base de l'invention est un appareil du type lingual. Mais la transposition de la description à un ensemble destiné à un appareil de type vestibulaire sera évidente pour le lecteur homme du métier.

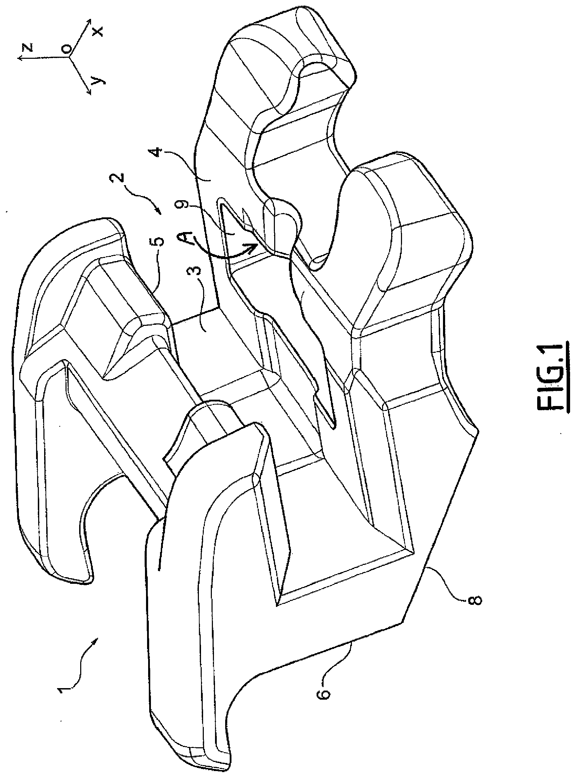

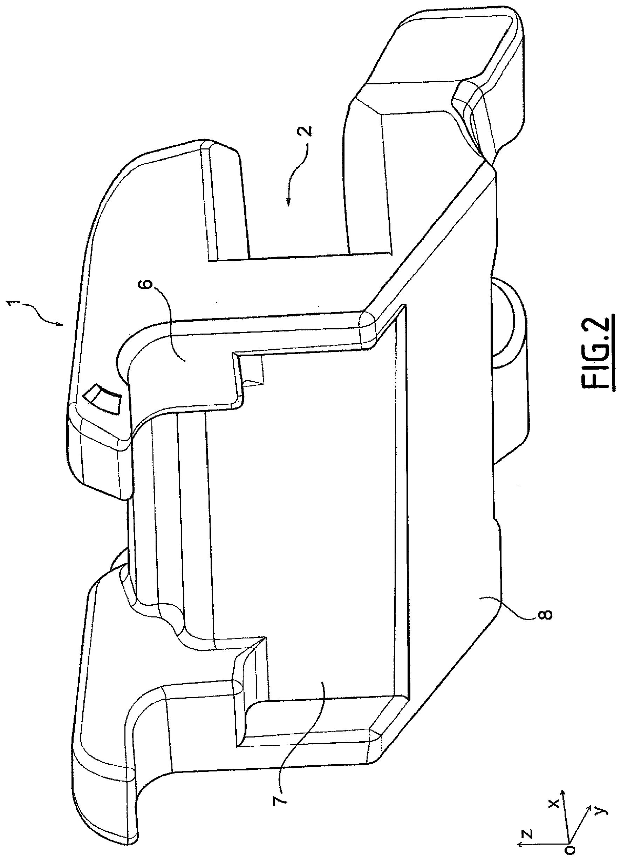

L'attache 1 montrée isolément sur les figures 1 et 2, et dont la configuration précise représentée n'est qu'un exemple non limitatif, comporte par référence au repère (O, X, Y, Z) montré sur ces mêmes figures :
- une gorge 2 à section sensiblement en forme de C ouverte dans la direction tournée vers la bouche du patient (direction linguale), donc disposée sur une face de l'attache qu'on appellera « face externe » destinée à recevoir un arc orthodontique, et délimitée par une paroi de fond 3 orientée sensiblement selon les axes OY, donc l'axe transversal de l'attache 1, et OZ, l'axe perpendiculaire à la direction longitudinale OX de l'attache 1, et par deux parois 4, 5 sensiblement perpendiculaires à la paroi de fond 3 et formant les deux branches du C. Ces parois 4, 5 sont orientées sensiblement selon les axes OX et OY ;
- une paroi arrière 6 située sur la face de l'attache destinée à être tournée en direction de la dent du patient sur laquelle l'attache sera montée, face qu'on appellera « face occlusale », opposée à la face linguale ; cette paroi arrière 6 porte un logement 7 de forme essentiellement rectangulaire dans l'exemple représenté, et dont la fonction sera vue plus loin ;
- une paroi de base 8 plane, qui est destinée à venir reposer sur la base qui portera l'attache 1.

La paroi 4 délimitant la gorge 2 et située la plus près de la paroi de base 8 porte un logement 9 orienté principalement selon l'axe transversal OY de l'attache 1, et dont la fonction sera explicitée plus loin.

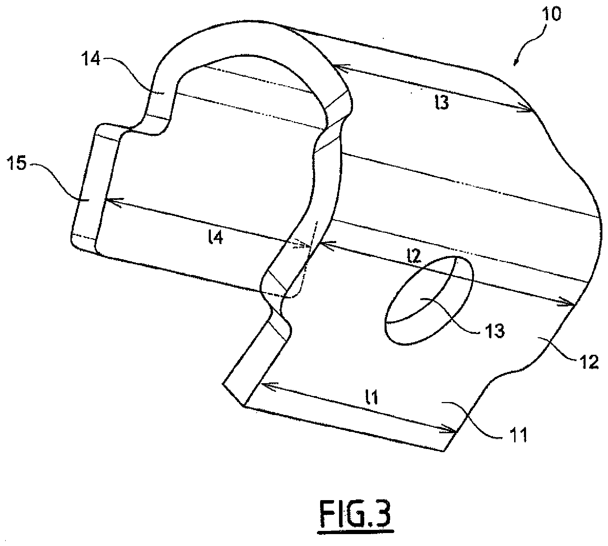

Le clip 10, montré isolément sur la figure 3, a des propriétés élastiques lui permettant de remplir les fonctions qui seront décrites par la suite. Il a sensiblement la forme d'un U dont les branches sont, au repos, légèrement resserrées dans l'exemple représenté.

Le clip 10, dans l'exemple représenté, se compose de quatre parties fonctionnelles successives, deux parties contiguës présentant, dans l'exemple représenté, des largeurs différentes leur permettant d'assurer au mieux leurs fonctions respectives.

Une première partie, constituant une première partie terminale du clip 10, est une languette 11 qui présente une largeur l1. Sa fonction est bloquer le clip 10 en position fermée, du fait qu'elle est destinée à plonger dans le logement 9 de la paroi 4 de l'attache 1 délimitant la gorge 2 et située la plus près de la paroi de base 8, et à y être maintenue par l'élasticité du clip 10. Le logement 9 étant délimité sur tout le périmètre de son ouverture, aucun mouvement mésio-distal non désiré du clip 10 n'est possible, et le clip 10 est maintenu fermement en position, sans possibilité de débattement latéral.

Une deuxième partie 12 à laquelle la languette 11 est rattachée est destinée à obturer la gorge 2 de l'attache 1 lorsque le clip 10 est en place. Elle a une largeur I2 supérieure à l1, de façon à maintenir efficacement l'arc dans la gorge 2. Elle porte de préférence des moyens de préhension permettant à l'orthodontiste de déplacer le clip 10, par un simple mouvement de rotation, entre ses positions « ouverte » libérant la gorge 2 pour l'insertion de l'arc dans la gorge 2 ou l'extraction de l'arc hors de la gorge 2 et « fermée » dans laquelle l'arc est bloqué dans la gorge 2 par le clip 10. Dans l'exemple représenté, ces moyens de préhension sont un orifice 13 dans lequel l'orthodontiste peut introduire l'extrémité d'un outil formant levier.

C'est par une rotation volontairement imposée par le praticien au clip 10 que le clip 10 est amené en position « ouverte » libérant la gorge 2. Toute rotation involontaire du clip 10 par pression de l'arc orthodontique sur la deuxième partie 12 du clip 10 selon sa tendance naturelle est rendue impossible par le blocage de la languette 11 par la face antérieure A du logement 9. De plus, l'arc n'applique de contraintes sur le clip 10 que dans une direction vestibulo-linguale. Le déplacement de l'arc dans la gorge 2 est limité par l'amplitude possible du déplacement de la languette 11 dans le logement 9. Ainsi, l'arc ne peut pas causer la libération de la gorge 2 par rotation du clip 10. Celle-ci ne peut s'effectuer que par une action volontaire du praticien qui, par rotation du clip 10, désengage la languette 11 du logement 9.

Plus la largeur du clip 10 au niveau de cette deuxième partie 12 est grande, plus le maintien de l'arc est assuré efficacement.

Une troisième partie 14 de largeur l3 pouvant être inférieure à l2 constitue une jonction élastique entre, d'une part, la deuxième partie 12 assurant l'obturation de la gorge 2 et, d'autre part, une quatrième partie 15 de largeur l4, qui constitue une deuxième partie terminale du clip 10. Cette quatrième partie 15 est une patte destinée à venir s'insérer dans le logement 7 ménagé sur la paroi arrière 6 de l'attache 1. Cette patte 15 et le logement 7 ont des formes sensiblement complémentaires pour que le logement 7 assure le maintien de la patte 15 selon la direction transversale OY. La patte 15 dirige la rotation du clip 10 lors de ses mouvements commandés par l'orthodontiste. Pour assurer au mieux ses fonctions, la patte 15 a de préférence une largeur l4 importante, généralement supérieure à l3 qui est elle-même généralement inférieure à l2 et l4 pour que l'élasticité du clip 10 au niveau de la troisième partie 14 soit optimale.

La quatrième partie 15 du clip 10 a donc simultanément :
- une fonction de prévention du détachement partiel ou complet du clip 10 et de l'attache 1 ;
- et une fonction de guidage de la rotation du clip 10.

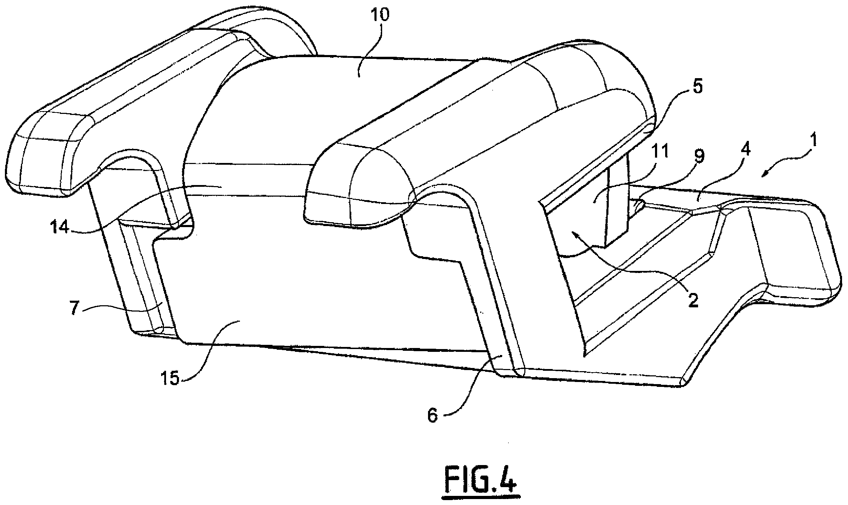

La figure 4 représente l'attache 1 avec le clip 10 monté sur elle. Les parties terminales 11, 15 du clip 10 sont insérées dans leurs logements 9, 7 respectifs, et le clip 10 chevauche la paroi 6 de l'attache 1 délimitant la gorge 2 la plus éloignée de la paroi de base 8.

L'attache 1 peut être fabriquée en tout matériau classiquement adapté à cet usage, tel qu'un matériau métallique biocompatible (acier inoxydable, titane, céramique notamment) et par tout procédé classique procurant l'excellente précision dimensionnelle nécessaire pour les attaches auto-ligaturantes. L'usinage ou la découpe laser sont particulièrement indiqués, davantage que le prototypage rapide.

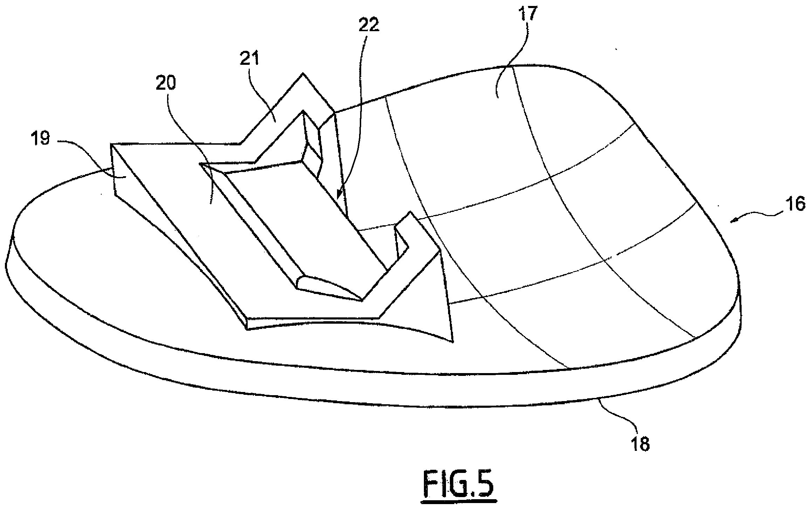

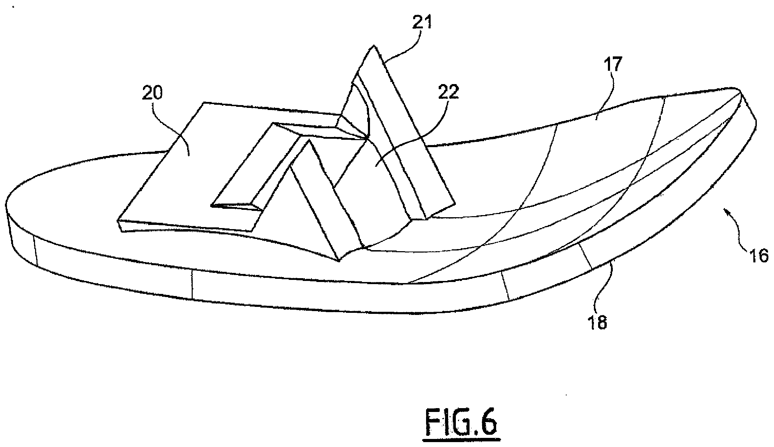

Les figures 5 et 6 montrent la base 16 sur la face externe (supérieure) 17 de laquelle l'attache 1 est destinée à être montée. La face occlusale (inférieure) 18 de la base 16 est destinée à être placée sur la dent correspondante du patient en lui étant classiquement fixée au moyen d'un matériau adhésif. Dans l'exemple représenté, la face supérieure 17 de la base 16 porte un support 19 pour l'attache 1. Ce support 19 comporte une partie plane 20 et une butée 21. La partie plane 20 peut éventuellement comporter un logement dans lequel l'attache 1 est destinée à être placée. Un tel logement favorise la précision du placement de l'attache 1, et contribue à la solidité de son maintien en place. Également il permet de diminuer l'épaisseur totale de l'ensemble pour une même configuration de l'attache 1, apportant ainsi un confort supplémentaire au patient. Le support 19 comporte également, sur la face de la butée 21 destinée à être tournée à l'opposé de l'attache 1, un logement 22 dans lequel la patte 15 du clip 10 est destinée à venir s'insérer lorsque le clip 10 est en position d'obturation de la gorge 2.

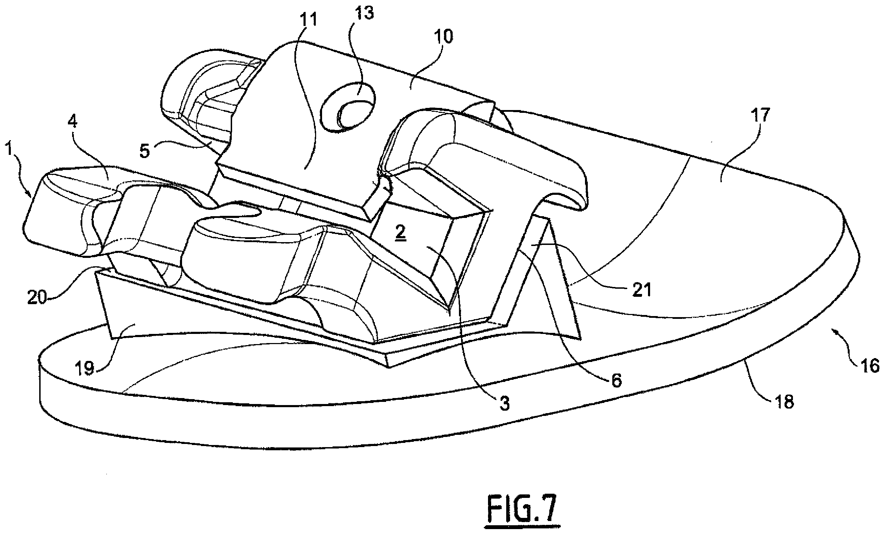

La figure 7 représente l'ensemble attache 1/clip 10/base 16 monté avec le clip 10 en position ouverte, permettant donc d'insérer l'arc orthodontique dans la gorge 2 de l'attache 1 ou de l'en extraire. Dans cette position, la patte 15 (non visible sur la figure 7) a son bord inférieur contre la paroi du logement 7 de la paroi arrière 6 de l'attache 1, le restant de la patte 15 étant écarté de la paroi 6 mais empêché de s'en éloigner par les parois du logement 22 de la butée 21 portée par la base 16.

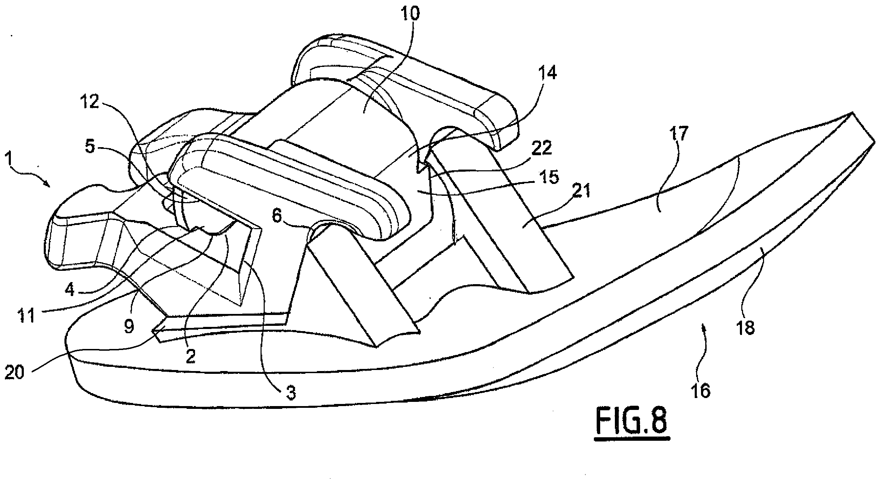

La figure 8 représente vue dans la direction opposée à celle de la figure 7 l'ensemble attache 1/clip 10/base 16 monté avec le clip 10 en position fermée, permettant donc de bloquer l'arc orthodontique dans la gorge 2 de l'attache 1. On voit que dans cette position, la patte 15 du clip 10 est plaquée contre la paroi arrière 6 de l'attache 1 et est donc contenue dans le logement 7. Quant à la languette 11 du clip 10, elle a été placée par l'orthodontiste, par un mouvement de rotation, dans le logement 9 correspondant de l'attache 1. ce mouvement de rotation est facile et très rapide à effectuer. En particulier, il n'est pas empêché par un éventuel dépôt de tartre sur l'ensemble, car le bras de levier procuré par la forme du clip 10 et sa rotation est suffisant pour détruire ou détacher ce dépôt, alors qu'un mouvement de translation, par exemple selon l'axe longitudinal OX de l'attache 1, serait susceptible d'être considérablement gêné par un dépôt de tartre sur la piste du clip.

L'élasticité du clip 10 est suffisante pour maintenir l'extrémité de la première branche 11 et la patte 15 dans leurs logements respectifs 9, 7. les efforts exercés par l'arc orthodontique sur le clip 10 ne peuvent s'exercer que dans la direction de sortie de l'arc de la gorge 2 (axe OX) puisqu'ils sont canalisés par les parois 4, 5 de la gorge 2 et ne tendent donc pas à faire sortir le clip 10 de ses logements 7, 9.

## Revendications

1. Ensemble formé par:
- une attache auto-ligaturante (1) destinée à faire partie d'un appareil orthodontique, ladite attache (1) présentant selon sa direction longitudinale (OX) une face externe et une face occlusale et étant pourvue sur sa face externe d'une gorge (2) pour la réception d'un arc orthodontique; et
- un clip élastique (10) déplaçable de manière réversible entre une position ouverte laissant un passage libre pour l'insertion de l'arc dans la gorge (2) ou l'extraction de l'arc hors de la gorge (2) et une position fermée obturant la gorge (2);
dans lequel ladite attache (1) et ledit clip (10) comportent des moyens permettant au déplacement du clip (10) de s'effectuer essentiellement selon un mouvement de rotation entre lesdites positions, sans glissement en translation du clip (10);
dans lequel le clip (10) a la forme générale d'un U dont une extrémité d'une première partie (11) qui obture la gorge (2) de l'attache (1) est reçue dans un premier logement (9) ménagé sur la face externe de l'attache (1), et dont une extrémité d'une quatrième partie (15) est reçue dans un deuxième logement (7), ménagé sur la face occlusale de l'attache (1);
dans lequel le clip (10) comporte au moins quatre parties successives, ladite première partie (11), constituant une première partie terminale du clip (10), formant une languette (11) destinée à plonger dans ledit premier logement (9) de l'attache (1), une deuxième partie (12), à laquelle la première partie (11) est rattachée, destinée à obturer la gorge (2) de l'attache (1) lorsque le clip (10) est en place, une troisième partie (14) constituant une jonction élastique entre d'une part la deuxième partie (12) et d'autre part la quatrième partie (15), constituant une deuxième partie terminale du clip (10) et formant une patte destinée à venir s'insérer dans le deuxième logement (7) de l'attache (1) pour diriger la rotation du clip (10) lors de ses mouvements commandés par un or une orthodontiste,
dans lequel l'ensemble comprend une base (16) présentant une face externe (17) et une face occlusale (18), ladite face externe (17) de la base (16) supportant ladite attache (1) et ladite face occlusale (18) étant destinée à reposer sur une dent du patient en épousant la surface de ladite dent, ladite base (16) portant sur sa face externe (17) une paroi (6) délimitant, conjointement avec la face occlusale de l'attache (1), le deuxième logement (7) dans lequel est reçue l'extrémité de la quatrième partie (15) du clip (10),
ladite base (16) présente sur sa face externe (17) un support (19) sur lequel est placée ladite attache (1),
ledit support (19) comporte une partie plane (20),
**caractérisé en ce que**
ledit support (19) comporte une butée (21) et
ledit support (19) comporte, sur la face de la butée (21) destinée à être tournée à l'opposé de l'attache (1), un logement (22) dans lequel la quatrième partie (15) du clip (10) est destinée à venir s'insérer lorsque le clip (10) est en position d'obturation de la gorge (2).

2. Ensemble selon la revendication 1, **caractérisé en ce que** la largeur (l1) de la première partie (11) du clip (10) est inférieure à la largeur (l2) de la deuxième partie (12) du clip (10).

3. Ensemble selon la revendication 1, **caractérisé en ce que** la largeur (l3) de la troisième partie (14) du clip (10) est inférieure à la largeur (l2) de la deuxième partie du clip (10).

4. Ensemble selon l'une des revendications 1 à 3, **caractérisé en ce que** la largeur (l4) de la quatrième partie du clip (10) est supérieure à la largeur (l3) de la troisième partie du clip (10).

5. Ensemble selon l'une des revendications 1 à 4, **caractérisé en ce que** le clip (10) comporte un moyen de préhension permettant au praticien de le déplacer entre lesdites positions.

6. Ensemble selon la revendication 5, **caractérisé en ce que** ledit moyen de préhension est un orifice (13) ménagé sur ladite deuxième partie (12) du clip (10).

7. Appareil orthodontique comportant un arc orthodontique et des ensembles comportant chacun une attache (1), un clip (10) et une base (16), destinés à être montés chacun sur une dent d'un patient, **caractérisé en ce que** au moins un desdits ensembles est du type selon l'une des revendications 1 à 6.

## Patentansprüche

1. Einheit, gebildet aus:
- einem selbstligierenden Bracket (1), das dazu bestimmt ist, Teil eines kieferorthopädischen Geräts zu sein, wobei das Bracket (1) gemäß seiner Längsrichtung (OX) eine Außenseite und eine okklusale Seite aufweist und auf seiner Außenseite mit einer Rille (2) zur Aufnahme eines kieferorthopädischen Bogens versehen ist; und
- einem elastischen Clip (10), der umkehrbar zwischen einer offenen Stellung, die einen freien Durchgang für die Einführung des Bogens in die Rille (2) oder die Entnahme des Bogens aus der Rille (2) lässt, und einer geschlossenen Stellung verschiebbar ist, die die Rille (2) verschließt;
wobei das Bracket (1) und der Clip (10) Einrichtungen aufweisen, die es dem Clip (10) ermöglichen, sich hauptsächlich gemäß einer Drehbewegung zwischen den Stellungen zu bewegen, ohne translatorisches Gleiten des Clips (10);
wobei der Clip (10) die allgemeine Form eines U hat, von dem ein Ende eines ersten Teils (11), der die Rille (2) des Brackets (1) verschließt, in einer ersten Aufnahme (9) aufgenommen wird, die an der Außenseite des Brackets (1) ausgespart ist, und von dem ein Ende eines vierten Teils (15) in einer zweiten Aufnahme (7) aufgenommen wird, die auf der okklusalen Seite des Brackets (1) ausgespart ist;
wobei der Clip (10) mindestens vier aufeinanderfolgende Teile aufweist, wobei der erste Teil (11), der einen ersten Endteil des Clips (10) bildet, eine Zunge (11) formt, die dazu bestimmt ist, in die erste Aufnahme (9) des Brackets (1) einzudringen, ein zweiter Teil (12), an den der erste Teil (11) anschließt, dazu bestimmt ist, die Rille (2) des Brackets (1) zu verschließen, wenn der Clip (10) eingesetzt ist, ein dritter Teil (14) eine elastische Verbindung zwischen einerseits dem zweiten Teil (12) und andererseits dem vierten Teil (15) bildet, der einen zweiten Endteil des Clips (10) bildet und eine Lasche formt, die dazu bestimmt ist, sich in die zweite Aufnahme (7) des Brackets (1) einzufügen, um die Drehung des Clips (10) bei seinen von einem oder mehreren Kieferorthopäden gesteuerten Bewegungen zu lenken,
wobei die Einheit eine Grundfläche (16) enthält, die eine Außenseite (17) und eine okklusale Seite (18) aufweist, wobei die Außenseite (17) der Grundfläche (16) das Bracket (1) trägt und die okklusale Seite (18) dazu bestimmt ist, auf einem Zahn des Patienten zu ruhen, indem sie sich an die Fläche des Zahns anpasst, wobei die Grundfläche (16) an ihrer Außenseite (17) eine Wand (6) trägt, die zusammen mit der okklusalen Seite des Brackets (1) die zweite Aufnahme (7) begrenzt, in der das Ende des vierten Teils (15) des Clips (10) aufgenommen wird,
wobei die Grundfläche (16) an ihrer Außenseite (17) einen Träger (19) aufweist, auf dem das Bracket (1) platziert wird und
wobei der Träger (19) einen ebenen Teil (20) aufweist, **dadurch gekennzeichnet, dass**
der Träger (19) einen Anschlag (21) aufweist und
der Träger (19) auf der Seite des Anschlags (21), die dazu bestimmt ist, dem Bracket (1) gegenüber zu liegen, eine Aufnahme (22) aufweist, in die der vierte Teil (15) des Clips (10) bestimmt ist, eingefügt zu werden, wenn der Clip (10) in der Verschlussstellung der Rille (2) ist.

2. Einheit nach Anspruch 1, **dadurch gekennzeichnet, dass** die Breite (l1) des ersten Teils (11) des Clips (10) geringer ist als die Breite (l2) des zweiten Teils (12) des Clips (10).

3. Einheit nach Anspruch 1, **dadurch gekennzeichnet, dass** die Breite (l3) des dritten Teils (14) des Clips (10) geringer ist als die Breite (l2) des zweiten Teils des Clips (10).

4. Einheit nach einem der Ansprüche 1 bis 3, **dadurch gekennzeichnet, dass** die Breite (l4) des vierten Teils des Clips (10) größer ist als die Breite (l3) des dritten Teils des Clips (10).

5. Einheit nach einem der Ansprüche 1 bis 4, **dadurch gekennzeichnet, dass** der Clip (10) eine Greifeinrichtung aufweist, die es dem Arzt erlaubt, ihn zwischen den Stellungen zu verschieben.

6. Einheit nach Anspruch 5, **dadurch gekennzeichnet, dass** die Greifeinrichtung eine Öffnung (13) ist, die auf dem zweiten Teil (12) des Clips (10) ausgespart ist.

7. Kieferorthopädisches Gerät, das einen kieferorthopädischen Bogen und Einheiten aufweist, die je ein Bracket (1), einen Clip (10) und eine Grundfläche (16) aufweisen, die dazu bestimmt sind, je auf einen Zahn eines Patienten montiert zu werden, **dadurch gekennzeichnet, dass** mindestens eine der Einheiten von der Art nach einem der Ansprüche 1 bis 6 ist.

## Claims

1. An assembly formed by:
- a self-ligating bracket (1) intended to be part of an orthodontic apparatus, said bracket (1) having in its longitudinal direction (OX) an outer face and an occlusal face and being provided on its outer face with a groove (2) for holding an orthodontic arch wire; and
- an elastic clip (10) that can be moved in a reversible manner between an open position, leaving a free passage for the insertion of the arch wire into the groove (2) or the extraction of the arch wire from the groove (2), and a closed position closing off the groove (2);
wherein said bracket (1) and said clip (10) comprise means allowing the clip (10) to be moved between said positions substantially by a rotational movement, without the clip (10) sliding in translation;
wherein the clip (10) is generally U-shaped, with an end of a first part (11), which closes off the groove (2) of the bracket (1), being held in a first housing (9) formed on the outer face of the bracket (1), and with an end of a fourth part (15) being held in a second housing (7) formed on the occlusal face of the bracket (1);
wherein the clip (10) comprises at least four successive parts, said first part (11), constituting a first terminal part of the clip (10), forming a tongue (11), intended to plunge into said first housing (9) of the bracket (1), a second part (12), to which the first part (11) is attached, intended to close off the groove (2) of the bracket (1) when the clip (10) is in place, a third part (14) constituting an elastic junction between, on the one hand, the second part (12) and, on the other hand, the fourth part (15), constituting a second terminal part of the clip (10) and forming a tab intended to be inserted into the second housing (7) of the bracket (1) to manage the rotation of the clip (10) during its movements commanded by an orthodontist,
wherein the assembly comprises a base (16) having an outer face (17) and an occlusal face (18), said outer face (17) of the base (16) supporting said bracket (1) and said occlusal face (18) being intended to rest on a patient's tooth by conforming to the surface of said tooth, said base (16) carrying on its outer face (17) a wall (6) that delimits, together with the occlusal face of the bracket (1), the second housing (7) in which the end of the fourth part (15) of the clip (10) is held,
wherein said base (16) has on its outer face (17) a support (19) on which said bracket (1) is placed and
wherein said support (19) comprises a planar part (20),
**characterized in that**
said support (19) comprises an abutment (21), and on the face of the abutment (21) which is intended to face opposing the bracket (1), a housing (22) into which the fourth part (15) of the clip (10) is intended to be inserted when the clip (10) is in the position closing off the groove (2).

2. Assembly according to Claim 1, **characterized in that** the width (11) of the first part (11) of the clip (10) is less than the width (12) of the second part (12) of the clip (10).

3. Assembly according to Claim 1, **characterized in that** the width (13) of the third part (14) of the clip (10) is less than the width (12) of the second part of the clip (10).

4. Assembly according to one of Claims 1 to 3, **characterized in that** the width (14) of the fourth part of the clip (10) is greater than the width (13) of the third part of the clip (10).

5. Assembly according to one of Claims 1 to 4, **characterized in that** the clip (10) comprises a grasping means enabling the practitioner to move it between said positions.

6. Assembly according to Claim 5, **characterized in that** said grasping means is an orifice (13) formed on said second part (12) of the clip (10).

7. Orthodontic apparatus comprising an orthodontic arch wire and assemblies which each comprise a bracket (1), a clip (10) and a base (16) that are each intended to be fitted to a patient's tooth, **characterized in that** at least one of said assemblies is of the type according to one of Claims 1 to 6.
